# FASCICULE DE BREVET EUROPEEN

(11) **EP 1 318 296 B1**
(45) Date de publication et mention de la délivrance du brevet: **04.04.2007**
(21) Numéro de dépôt: 02292853.5
(22) Date de dépôt: 15.11.2002
(51) Int. Cl.: F02N 15/02, F16H 55/17

(54) **Volant de démarrage avec fixation de la couronne dentée par sa surface radiale**
Anlasschwungrad mit Fixierung an der radialen Fläche des Zahnkranzes
Starter flywheel with fixing of the gear ring to its radial surface

(30) Priorité: 04.12.2001 FR 0115653
(43) Date de publication de la demande: 11.06.2003
(73) Titulaire: DEFONTAINE, 85530 La Bruffière (FR)
(72) Inventeur: Bonnefous, Jean, 44400 Reze (FR); Douillard, Frank, 85610 La Bernardiere (FR); Gaudu, Serge, 85600 Montaigu (FR)
(74) Mandataire: Rémont, Claude

(56) Documents cités:
- DE-A- 3 132 503
- FR-A- 2 799 253
- PATENT ABSTRACTS OF JAPAN vol. 016, no. 169 (M-1239), 23 avril 1992 (1992-04-23) & JP 04 015352 A (MAZDA MOTOR CORP), 20 janvier 1992 (1992-01-20)

## Description

La présente invention concerne un volant de démarrage apte à être engrené avec un pignon de démarreur pour le démarrage des moteur à combustion interne, notamment pour les véhicules tels que les automobiles (FR-A-2 799 253).

On connaît des volants de démarrage de moteur à combustion interne rotatifs autour d'un axe de rotation, comprenant un support et une couronne dentée fixée au support, dans lesquels le support possède une extrémité périphérique externe présentant une surface radiale et une surface périphérique et la couronne dentée possède une extrémité périphérique interne présentant une surface radiale complémentaire et une surface périphérique complémentaire.

Un problème important relatif aux volants de démarreur concerne leur durée de vie. Les volants sont habituellement capables de supporter et d'assurer entre un 20 000 et 60 000 démarrages, ce qui deviendra insuffisant, vu les projets de législation visant à obliger de couper le moteur quand le véhicule est à l'arrêt (à un feu rouge, dans des embouteillages...).

La demanderesse a décrit dans la demande de brevet français n°99 12 240 du 30 septembre 1999 un volant dont la couronne dentée est fixée sur le support par l'intermédiaire de leurs surfaces périphérique et périphérique complémentaire respectives et dont la fixation permet une déformation radiale de la couronne dentée. De tels volants supportent facilement entre 200 000 et 300 000 démarrages.

Un inconvénient de ces volants « à longue durée de vie » est la difficulté de maîtriser le battement extérieur de la couronne dentée par rapport au vilebrequin.

En effet, le volant et la roue dentée sont usinés séparément avec notamment des tolérances mécaniques d'usinage du diamètre interne de la surface périphérique complémentaire de la couronne dentée et du diamètre externe de la surface périphérique du support. Lors de l'assemblage du volant, la fixation de la surface périphérique complémentaire de la couronne dentée à la surface périphérique du support fait que les tolérances dans la direction radiale se trouvent cumulées une fois le volant assemblé.

Le problème posé est d'avoir un volant dont le battement extérieur de la couronne par rapport au vilebrequin est diminué, tout en ayant une structure permettant de garder des durées de vie au moins comprises entre 200 000 et 300 000 démarrages.

Selon l'invention, un volant d'un moteur à combustion interne rotatif autour d'un axe de rotation, comprenant un support et une couronne dentée fixée au support, le support possédant une extrémité périphérique externe comprenant une surface radiale, et la couronne dentée possédant une extrémité périphérique interne comprenant une surface radiale complémentaire, est caractérisé en ce que la couronne dentée est conformée de façon à permettre une déformation radiale de la couronne dentée vers l'axe de rotation du volant au moins dans certains secteurs angulaires de déformation correspondant aux zones de compression et de détente des pistons du moteur et en ce que la surface radiale complémentaire est fixée à la surface radiale dans des secteurs angulaires de fixation situés entre deux secteurs angulaires de déformation adjacents.

Selon l'invention, les tolérances mécaniques d'usinage du diamètre interne de la surface périphérique complémentaire et du diamètre externe de la surface périphérique ne se trouvent plus cumulées une fois le volant assemblé étant donné que ces deux surfaces ne jouent plus le rôle de surface permettant de positionner la couronne dentée par rapport au support lors de l'assemblage du volant ni de fixer la couronne dentée sur le support.

D'autres particularités de la présente invention ressortiront dans la description qui va suivre des modes de réalisation donné à titre d'exemple non limitatif.
- la figure 1 représente en vue de face un volant selon un premier mode de réalisation de l'invention ;
- la figure 2 représente une vue en coupe radiale selon la ligne I-I de la figure 1 ;
- la figure 3 représente une vue en coupe radiale selon la ligne II-II de la figure 1 ;
- la figure 4 représente une vue de détail de l'extrémité radiale IV de la figure 2 ;
- la figure 5 représente une vue de détail de l'extrémité radiale V de la figure 3 ;
- la figure 6 est une vue similaire à la figure 4 d'un deuxième mode de réalisation de l'invention ; et
- la figure 7 est une vue similaire à la figure 5 du deuxième mode de réalisation de l'invention.

Un volant 1 d'un moteur à combustion thermique est monté axialement en rotation autour d'un axe de rotation 2. Le volant 1 comprend un support 3 qui est relié mécaniquement à un vilebrequin, par exemple par boulonnage, et une couronne dentée 4 qui est reliée au support 3.

Le support 3 et la couronne dentée 4 présentent, réciproquement, une extrémité périphérique externe 5 et une extrémité périphérique interne 6, l'extrémité périphérique interne 6 de la couronne dentée 4 étant fixée à l'extrémité périphérique externe 5 du support 3. L'extrémité périphérique externe 5 présente une surface périphérique 7 et une surface radiale 8. De même, l'extrémité périphérique interne 6 présente une surface périphérique complémentaire 9 et une surface radiale complémentaire 10.

La fixation de la couronne dentée 4 au support 3 est réalisée par la fixation de la surface radiale complémentaire 10 de la couronne dentée 4 à la surface radiale 8 du support 3 de façon à permettre une déformation radiale de la couronne dentée 4 vers l'axe de rotation 2 lors de l'engrènement de la couronne dentée 4 au pignon du démarreur.

Afin de réaliser la déformation radiale de la couronne dentée 4, il y a un jeu 13 entre la surface périphérique 7 du support 3 et la surface périphérique complémentaire 9 de la couronne dentée 4 qui lui est en regard. Il n'y a donc pas de contact entre la surface périphérique 7 du support 3 et la surface périphérique complémentaire 9 de la couronne dentée 4.

La couronne dentée 4 est conformée de façon à permettre une déformation radiale de la couronne dentée 4 vers l'axe de rotation 2 du volant 1 au moins dans des secteurs angulaires de déformation 12 correspondant aux zones de compression et de détente des pistons du moteur et est fixée par sa surface radiale complémentaire 10 à la surface radiale 8 dans des secteurs angulaires de fixation 14 qui sont situés chacun entre deux secteurs angulaires de déformation 12 adjacents.

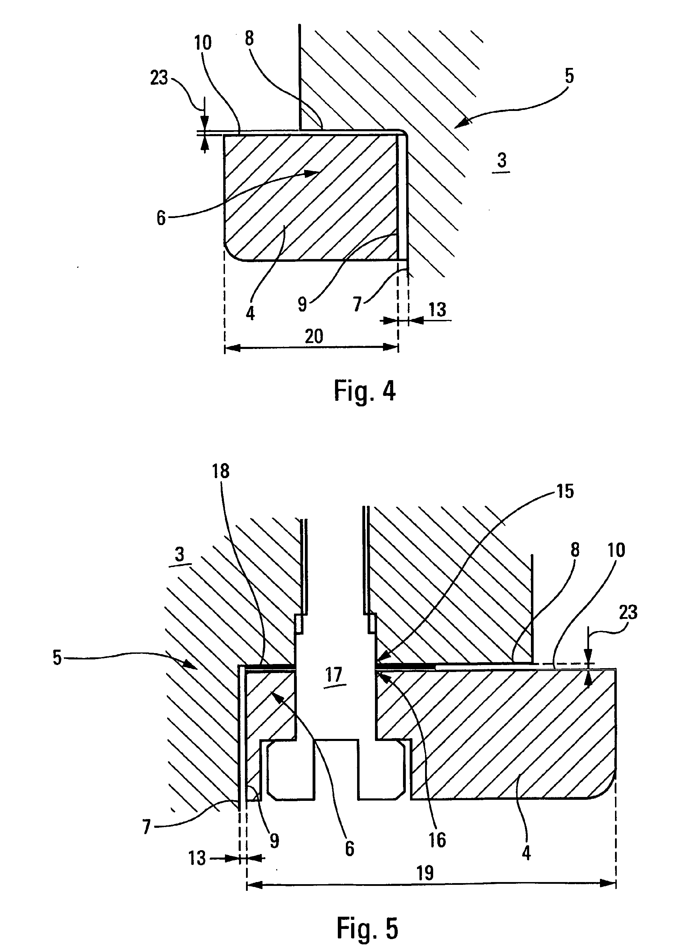

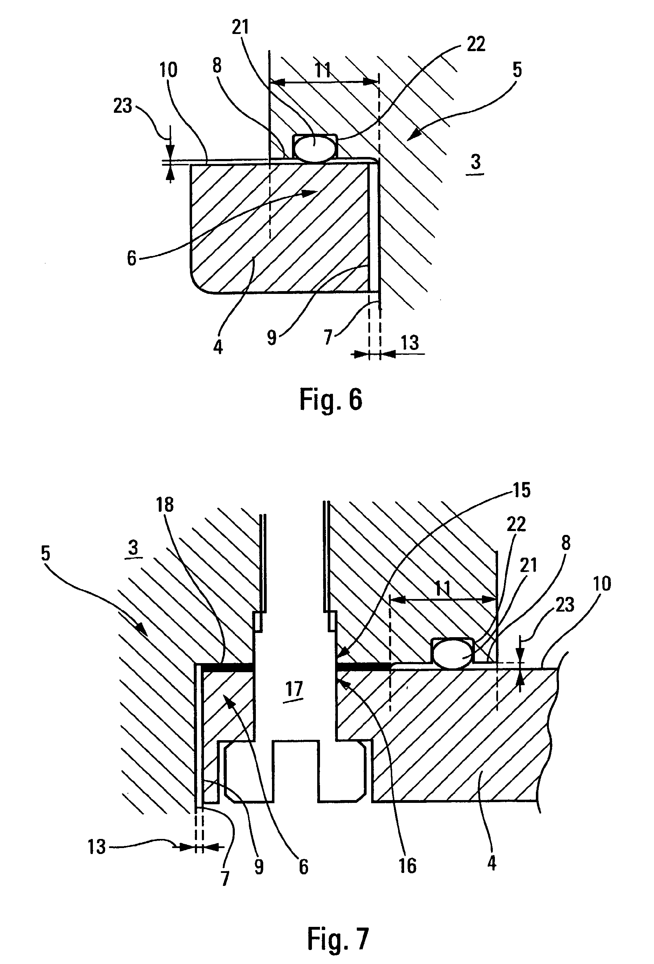

Afin de faciliter la déformation radiale de la couronne dentée 4, il y a un jeu 23 entre la surface radiale 8 du support 3 et la surface radiale complémentaire 10 de la couronne dentée 4 qui lui est en regard sur l'étendue d'au moins tous les secteurs angulaires de déformation 12. Aux figures 4 et 6 qui représentent une vue en coupe selon un rayon situé dans un secteur angulaire de déformation 12, il y n'a pas de contact entre la totalité de la surface radiale 8 du support 3 et la totalité de la surface radiale complémentaire 10 de la couronne dentée 4 qui lui est en regard.

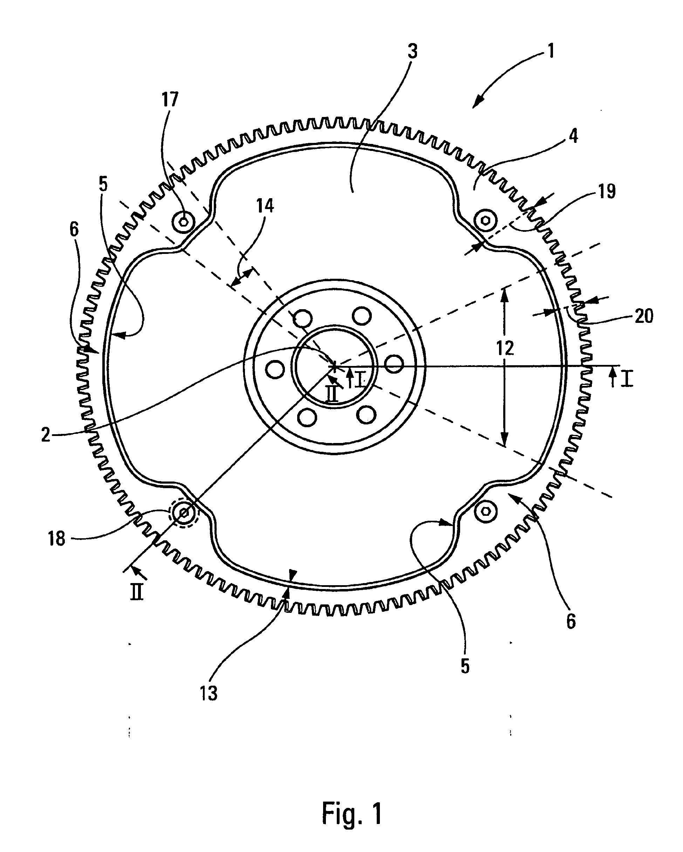

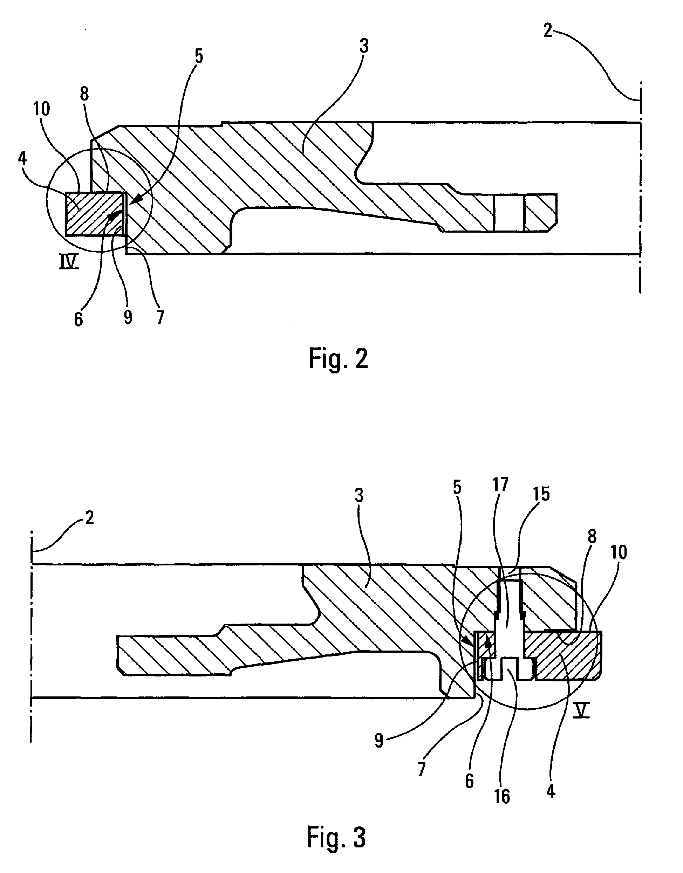

Dans les exemples illustrés aux figures 1 à 7, la surface radiale 8 du support 3 comprend dans les secteurs angulaires de fixation 14 des orifices 15 et la surface radiale complémentaire 10 de la couronne dentée 4 comprend des orifices complémentaires 16 dans ces mêmes secteurs angulaires de fixation 14.

Les orifices 15 et les orifices complémentaires 16 s'étendent parallèlement à l'axe de rotation 2 du volant 1. Chaque orifice 15 débouche à la surface radiale 8 et chaque orifice complémentaire 16 débouche à la surface radiale complémentaire 10 en faisant face à l'orifice 15 correspondant.

La couronne dentée 4 est fixée au support 3 par des vis 17 qui sont vissées chacune dans l'orifice 15 et l'orifice complémentaire 16 correspondant.

Le contact de serrage entre la surface radiale 8 du support 3 et la surface radiale complémentaire 10 de la couronne dentée 4 est limitée à des zones de contact de serrage 18 qui sont adjacentes aux orifices 15 et aux orifices complémentaires 16.

Dans les modes de réalisation illustrés aux figures 1 à 7, il y a aussi un jeu 23 entre la surface radiale 8 du support 3 et la surface radiale complémentaire 10 de la couronne dentée 4 qui lui est en regard en dehors des secteurs angulaires de déformation 12 : comme on peut le voir aux figures 5 et 7 qui représentent une vue en coupe selon un rayon situé dans un secteur angulaire de fixation 14, il n'y pas de contact entre la surface radiale 8 et la surface radiale complémentaire 10 hors de la zone de contact de serrage 18.

La couronne dentée 4 présente une épaisseur radiale 19,20 qui dépend de l'éloignement angulaire avec les avec les secteurs angulaires de déformation 12. L'épaisseur radiale 20 de la couronne dentée 4 dans les secteur angulaires de déformation 12 est inférieure à celle 19 de la couronne dentée 4 dans les secteur angulaires de fixation 14.

Dans l'exemple illustré aux figures 1 à 7, l'épaisseur radiale 19 de la couronne dentée 4 pour les secteur angulaires comprenant les zones de contact de serrage 18 est supérieure à l'épaisseur radiale 20 de la couronne dentée 4 pour les secteurs angulaires éloignés des zones de contact de serrage 18.

La faible épaisseur 20 aux secteurs angulaires de déformation 12 facilite la déformation radiale de la couronne dentée et l'épaisseur 19 plus importante aux secteurs angulaires de fixation 14 permet d'avoir une surface de contact suffisamment importante pour avoir une fixation fiable de la couronne dentée 4 sur le support 3.

Selon le mode de réalisation illustré aux figures 6 et 7, le volant 1 comprend un joint annulaire 21 en matière viscoélastique qui est mis sous contrainte dans les directions axiale et radiale dans une gorge annulaire 22 réalisée à la surface radiale 8 du support 3 et qui est en contact avec la surface radiale complémentaire 10 de la couronne dentée 4.

Comme on peut le voir aux figures 6 et 7, la gorge annulaire 22 est réalisée dans une couronne radiale 11 de la surface radiale 8 du support 3, le jeu 23 entre la surface radiale 8 et la surface radiale complémentaire 10 existant le long de la surface de la couronne radiale 11. Malgré la distance séparant la surface radiale 8 de la surface radiale complémentaire 10 sur l'étendue de la couronne radiale 11, le joint annulaire 21 est en contact avec la surface radiale complémentaire 10 et est sous contrainte par compression dans les directions axiale et radiale.

Le joint annulaire 21 permet de réduire les bruits de démarrage par l'absorption des vibrations transmettant l'onde sonore par voie solide.

Il est évidemment possible de réaliser la gorge annulaire 22 à la surface radiale complémentaire 10 de la couronne dentée 4, le joint annulaire 21 étant alors en contact avec la surface radiale 8 du support 3.

On a ainsi décrit un volant 1 dont la couronne dentée 4 est fixée à la surface radiale 8 du support 3 par l'intermédiaire sa surface radiale complémentaire 10 permettant une déformation radiale de la couronne 4 lors de l'engrènement de la couronne dentée 4 avec le pignon du démarreur.

De plus, une telle invention permet d'assembler le volant 1 sans tenir compte des tolérances mécaniques d'usinage de la surface périphérique 7 et de la surface périphérique complémentaire 9. La fabrication d'un volant 1 peut être réalisée, par exemple, en suivant les étapes suivantes :
- en positionnant la surface radiale complémentaire 10 sur la surface radiale 8, la couronne dentée 4 et le support 3 ayant leurs axes de rotation confondus avec celui du volant 1,
- en perçant, selon la direction axiale, en continu, chaque orifice 15 débouchant à la surface radiale 8 avec l'orifice complémentaire 16 le prolongeant, ce qui permet de positionner angulairement et radialement la couronne dentée 4 par rapport au support, sans que les écarts dimensionnels des surfaces périphérique 7 et périphérique complémentaire 9 n'interviennent,
- en introduisant une vis 17 dans chaque orifice 15 et orifice complémentaire 16 correspondant de façon à assembler la surface radiale complémentaire 10 de la couronne dentée 4 à la surface radiale 8 du support 3, les orifices 15 et les orifices complémentaires 16 se trouvant naturellement alignés du fait de leur perçage en continu.

La fixation de la couronne dentée 4 au support 3 par l'intermédiaire de la surface radiale 8 et de la surface radiale complémentaire 10 fait que le battement de la couronne 4 par rapport à l'axe 2 est ainsi diminué d'un facteur compris entre 2 et 3 par rapport aux couronnes dentées fixées par l'intermédiaire des surfaces périphérique et périphérique complémentaire.

De plus, la durée de vie du volant est augmentée (outre la déformation radiale de la couronne dentée) par l'augmentation du rapport de conduite : la diminution des tolérances mécaniques permet une augmentation du diamètre extérieur de la couronne.

Bien entendu, le volant selon la présente invention doit être muni de moyens d'indexation sur l'axe de rotation 2 précis et fiables permettant de faire en sorte que les secteurs angulaires de déformation 12 prévus sur la couronne 4 correspondent de façon précise aux zones de compression et de détente des différents cylindres du moteur.

Le volant 1 représenté à la figure 1, qui comporte quatre secteurs angulaires de déformation 12, est adapté à équiper un moteur à quatre cylindres. De façon plus générale, il y a autant de secteurs angulaires de déformation 12 que de pistons reliés au vilebrequin entraînant le volant 1.

Bien entendu, la présente invention n'est pas limitée aux modes de réalisation décrits ci-dessus, et on peut apporter à ceux-ci de nombreux changements et modifications sans sortir du domaine de l'invention.

## Revendications

1. Volant (1) d'un moteur à combustion interne, le volant ayant un axe de rotation (2) et comprenant un support (3) et une couronne dentée (4) fixée au support (3), le support (3) possédant une extrémité périphérique externe (5) comprenant une surface radiale (8) perpendiculaire à l'axe de rotation (2), et la couronne dentée (4) possédant une extrémité périphérique interne (6) comprenant une surface radiale complémentaire (10) perpendiculaire à l'axe de rotation (2), la couronne dentée (4) étant conformée de façon à permettre une déformation radiale de la couronne dentée (4) vers l'axe de rotation (2) au moins dans certains secteurs angulaires de déformation (12) correspondant aux zones de compression et de détente des pistons du moteur, **caractérisé en ce que** la surface radiale complémentaire (10) est fixée à la surface radiale (8) et est en contact de serrage avec cette dernière dans des secteurs angulaires de fixation (14) situés entre deux secteurs angulaires de déformation (12) adjacents.

2. Volant (1) selon la revendication 1, **caractérisé en ce que** l'extrémité périphérique externe (5) du support (3) comprend une surface périphérique (7), **en ce que** l'extrémité périphérique interne (6) de la couronne dentée (4) comprend une surface périphérique complémentaire (9), et **en ce qu'**il y a un jeu (13) entre la surface périphérique (7) du support (3) et la surface périphérique complémentaire (9) de la couronne dentée (4) qui lui est en regard.

3. Volant (1) selon la revendication 1 ou 2, **caractérisé en ce que** la surface radiale (8) comprend dans les secteurs angulaires de fixation (14) plusieurs orifices (15) s'étendant parallèlement à l'axe de rotation (2), **en ce que** la surface radiale complémentaire (10) comprend dans les secteurs angulaires de fixation (14) plusieurs orifices complémentaires (16) s'étendant parallèlement à l'axe de rotation (2), et **en ce que** la couronne dentée (4) est fixée au support (3) par des vis (17) vissées dans les orifices (15) et les orifices complémentaires (16) correspondants.

4. Volant (1) selon la revendication 3, **caractérisé en ce qu**'il y a un contact de serrage entre la surface radiale (8) du support (3) et la surface radiale complémentaire (10) de la couronne dentée (4) qui lui est en regard au moins dans des zones de contact (18) adjacentes aux orifices (15) et aux orifices complémentaires (16).

5. Volant (1) selon l'une des revendications 1 à 4, **caractérisé en ce que** sur l'étendue d'au moins tous les secteurs angulaires de déformation (12), il y a un jeu (23) entre la surface radiale (8) du support (3) et la surface radiale complémentaire (10) de la couronne dentée (4) qui lui est en regard.

6. Volant (1) selon la revendication 5 dépendante de la revendication 4, **caractérisé en ce que,** dans les secteurs angulaires de fixation (14), hors des zones de contact (18), il y a un jeu (23) entre la surface radiale (8) du support (3) et la surface radiale complémentaire (10) de la couronne dentée (4) qui lui est en regard, le contact de serrage entre la surface radiale (8) et la surface radiale complémentaire (10) étant limité aux zones de contact de serrage (18).

7. Volant (1) selon l'une des revendications 1 à 6, **caractérisé en ce que** l'épaisseur radiale (20) de la couronne dentée (4) dans les secteurs angulaires de déformation (12) est inférieure à l'épaisseur radiale (19) de la couronne dentée (4) dans les secteurs angulaires de fixation (14).

8. Volant (1) selon l'une des revendications 1 à 7, **caractérisé en ce qu'**il comprend un joint annulaire (21) en matière viscoélastique qui est mis sous contrainte dans les directions axiale et radiale dans une gorge annulaire (22) réalisée à l'une des surfaces (8,10) parmi la surface radiale (8) et la surface radiale complémentaire (10) et qui est en contact avec l'autre de ces surfaces (10,8).

9. Volant (1) selon la revendication 8 dépendante de la revendication 5 ou 6, **caractérisé en ce que** la gorge annulaire (22) est réalisée dans l'étendue de la couronne radiale (11) sur l'étendue de laquelle il y a un jeu (23) entre la surface radiale (8) et la surface radiale complémentaire (10) qui lui est en regard.

10. Procédé de fabrication d'un volant (1) ayant un axe de rotation (2) par assemblage d'une couronne dentée (4) possédant une extrémité périphérique interne (6) comprenant une surface radiale complémentaire (10) perpendiculaire à l'axe de rotation (2) à un support (3) possédant une extrémité périphérique externe (5) comprenant une surface radiale (8) perpendiculaire à l'axe de rotation (2), **caractérisé en ce que** l'on réalise les étapes suivantes :
- on positionne de façon coaxiale la surface radiale complémentaire (10) sur la surface radiale (8),
- on perce en continu selon la direction de l'axe de rotation (2), dans des secteurs angulaires de fixation (14), des orifices (15) débouchant à la surface radiale (8) et des orifices complémentaires (16) débouchant à la surface radiale complémentaire (10) et prolongeant les orifices (15), et
- on visse une vis (17) dans chaque orifice (15) et orifice complémentaire (16) correspondant de façon à fixer la surface radiale complémentaire (10) à la surface radiale (8) par contact de serrage dans les secteurs angulaires de fixation (14) et à permettre une déformation radiale de la couronne dentée (4) vers l'axe de rotation (2) dans des secteurs angulaires de déformation (12) situés entre deux secteurs angulaires de fixation (14) adjacents.

## Claims

1. Flywheel (1) for an internal combustion engine, the flywheel having an axis of rotation (2) and comprising a bracket (3) and a gear ring (4) fixed to the bracket (3), the bracket (3) having an external peripheral extremity (5) comprising a radial surface (8) perpendicular to the axis of rotation (2), and the gear ring (4) having an internal peripheral extremity (6) comprising a complementary radial surface (10) perpendicular to the axis of rotation (2), the gear ring (4) being configured so as to allow a radial deformation of the gear ring (4) towards the axis of rotation (2) at least in certain angular deformation sectors (12) corresponding to zones of compression and decompression of the engine's pistons, **characterized in that** the complementary radial surface (10) is fixed to the radial surface (8) and is in pressing contact with this latter in angular fixing sectors (14) situated between two adjacent angular deformation sectors (12).

2. Flywheel (1) in accordance with claim 1, **characterized in that** the external peripheral extremity (5) of the bracket (3) comprises a peripheral surface (7), **in that** the internal peripheral extremity (6) of the gear ring (4) comprises a complementary peripheral surface (9), and that in there is a clearance (13) between the peripheral surface (7) of the bracket (3) and the complementary peripheral surface (9) of the gear ring (4) facing it.

3. Flywheel (1) in accordance with claim 1 or claim 2, **characterized in that** the radial surface (8) comprises in the angular fixing sectors (14) several orifices (15) extending parallel to the axis of rotation (2), **in that** the complementary radial surface (10) comprises in the angular fixing sectors (14) several complementary orifices (16), extending parallel to the axis of rotation (2), and **in that** the gear ring (4) is fixed to the bracket (3) by screws (17) screwed into the orifices (15) and the corresponding complementary orifices (16).

4. Flywheel (1) in accordance with claim 3, **characterized in that** there is a pressing contact between the radial surface (8) of the bracket (3) and the complementary radial surface (10) of the gear ring (4) facing it at least in contact zones (18) adjacent to the orifices (15) and the complementary orifices (16).

5. Flywheel (1) in accordance with one of claims 1 to 4, **characterized in that**, over the extent of at least all the angular deformation sectors (12), there is a clearance (23) between the radial surface (8) of the bracket (3) and the complementary radial surface (10) of the gear ring (4) facing it.

6. Flywheel (1) in accordance with claim 5, depending on claim 4, **characterized in that**, in the angular fixing sectors (14), outside the contact zones (18), there is a clearance (23) between the radial surface (8) of the bracket (3) and the complementary radial surface (10) of the gear ring (4) facing it, the pressing contact between the radial surface (8) and the complementary radial surface (10) being limited to the pressing contact zones (18).

7. Flywheel (1) in accordance with one of claims 1 to 6, **characterized in that** the radial thickness (20) of the gear ring (4) in the angular deformation sectors (12) is less than the radial thickness (19) of the gear ring (4) in the angular fixing sectors (14).

8. Flywheel (1) in accordance with one of claims 1 to 7, **characterized in that** it comprises an annular seal (21) made from visco-elastic material which is forced in the radial and axial directions into an annular groove (22) arranged at one of the surfaces (8, 10) among the radial surface (8) and the complementary radial surface (10) and which is in contact with the other of these surfaces (10, 8).

9. Flywheel (1) in accordance with claim 8, depending on claim 5 or claim 6, **characterized in that** the annular groove (22) is arranged in the extent of the gear ring (11) over which there is a clearance (23) between the radial surface (8) and the complementary radial surface (10) facing it.

10. Method for manufacturing a flywheel (1) having an axis of rotation (2) by joining a gear ring (4) having an internal peripheral extremity (6) comprising a complementary radial surface (10) perpendicular to the axis of rotation (2) to a bracket (3) having an external peripheral extremity (5) comprising a radial surface (8) perpendicular to the axis of rotation (2), **characterized in that** the following steps are executed:
- the complementary radial surface (10) is positioned coaxially over the radial surface (8),
- orifices (15) opening out on to the radial surface (8) and complementary orifices (16) opening out on to the complementary radial surface (10) and prolonging the orifices (15) are continuously drilled in the direction of the axis of rotation (2) in angular fixing sectors (14), and
- a screw (17) is screwed into each orifice (15) and corresponding complementary orifice (16) so as to fix the complementary radial surface (10) to the radial surface (8) by locking contact in the angular fixing sectors (14) and to allow a radial deformation of the gear ring (4) towards the axis of rotation (2) in angular deformation sectors (12) situated between two adjacent angular fixing sectors (14).

## Patentansprüche

1. Schwungrad (1) eines Verbrennungsmotors, wobei das Schwungrad eine Drehachse (2) besitzt und einen Träger (3) und einen Zahnkranz (4) aufweist, der an dem Träger befestigt ist, wobei der Träger (3) ein äußeres Umfangsende (5) mit einer senkrecht zu der Drehachse (2) liegenden radialen Fläche (8) besitzt, und wobei der Zahnkranz (4) ein inneres Umfangsende (6) besitzt mit einer senkrecht zu der Drehachse (2) liegenden komplementären radialen Fläche (10), wobei der Zahnkranz (4) derart ausgebildet ist, dass er eine radiale Verformung des Zahnkranzes (4) zu der Drehachse (2) hin zumindest in bestimmten Verformungswinkelsektoren (12) zulässt, welche den Druck- und Entspannungsbereichen der Kolben des Motors entsprechen, **dadurch gekennzeichnet, dass** die komplementäre radiale Fläche (10) an der radialen Fläche (8) befestigt ist und sich in Presskontakt mit dieser letzteren in Befestigungswinkelsektoren (14) befindet, die zwischen zwei benachbarten Verformungswinkelsektoren (12) angeordnet sind.

2. Schwungrad (1) gemäß Anspruch 1, **dadurch gekennzeichnet, dass** das äußere Umfangsende (5) des Trägers (3) eine Umfangsfläche (7) aufweist, dass das innere Umfangsende (6) des Zahnkranzes (4) eine komplementäre Umfangsfläche (9) aufweist, und dass es ein Spiel (13) zwischen der Umfangsfläche (7) des Trägers (3) und der komplementären Umfangsfläche (9) des Zahnkranzes (4), welche ihr gegenüberliegt, gibt.

3. Schwungrad (1) gemäß Anspruch 1 oder 2, **dadurch gekennzeichnet, dass** die radiale Fläche (8) in den Befestigungswinkelsektoren (14) mehrere Öffnungen (15) aufweist, die sich parallel zu der Drehachse (2) erstrecken, dass die komplementäre radiale Fläche (10) in den Befestigungswinkelsektoren (14) mehrere komplementäre Öffnungen (16) aufweist, die sich parallel zu der Drehachse (2) erstrecken, und dass der Zahnkranz (4) an dem Träger (3) durch in den Öffnungen (15) und den entsprechenden komplementären Öffnungen (16) verschraubten Schrauben (17) befestigt ist.

4. Schwungrad (1) gemäß Anspruch 3, **dadurch gekennzeichnet, dass** es einen Druckkontakt zwischen der radialen Fläche (8) des Trägers (3) und der komplementären radialen Fläche (10) des Zahnkranzes (4), die ihr gegenüberliegt, zumindest in Kontaktbereichen (18) gibt, die angrenzend an die Öffnungen (15) und die komplementären Öffnungen (16) liegen

5. Schwungrad (1) gemäß einem der Ansprüche 1 bis 4, **dadurch gekennzeichnet, dass** es in dem Bereich zumindest aller Verformungswinkelsektoren (12) ein Spiel (23) zwischen der radialen Fläche (8) des Trägers (3) und der komplementären radialen Fläche (10) des Zahnkranzes (4), welche ihr gegenüberliegt, gibt.

6. Schwungrad (1) gemäß Anspruch 5 abhängig von Anspruch 4, **dadurch gekennzeichnet, dass** es in den Befestigungswinkelsektoren (14) außerhalb der Kontaktbereiche (18) ein Spiel (23) zwischen der radialen Fläche (8) des Trägers (3) und der komplementären radialen Fläche (10) des Zahnkranzes (4), welche ihr gegenüberliegt, gibt, wobei der Druckkontakt zwischen der radialen Fläche (8) und der komplementären radialen Fläche (10) auf die Druckkontaktbereiche (18) begrenzt ist.

7. Schwungrad (1) gemäß einem der Ansprüche 1 bis 6, **dadurch gekennzeichnet, dass** die radiale Dicke (20) des Zahnkranzes (4) in den Verformungswinkelsektoren (12) geringer ist als die radiale Dicke (19) des Zahnkranzes (4) in den Befestigungswinkelsektoren (14).

8. Schwungrad (1) gemäß einem der Ansprüche 1 bis 7, **dadurch gekennzeichnet, dass** es einen Abdichtungsring (21) aus viskoelastiscem Material aufweist, der in einer Ringnut (22), welche in einer der Flächen (8, 10) der radialen Fläche (8) und der komplementären radialen Fläche (10) ausgeführt ist, und welche sich in Kontakt mit der anderen dieser Flächen (10, 8) befindet, unter Spannung in axiale und radiale Richtung gesetzt wird.

9. Schwungrad (1) gemäß Anspruch 8, abhängig von Anspruch 5 oder 6, **dadurch gekennzeichnet, dass** die Ringnut (22) in dem Bereich des radialen Kranzes (11) ausgeführt ist, in dessen Bereich es ein Spiel (23) zwischen der radialen Fläche (8) und der komplementären radialen Fläche (10), welche ihr gegenüberliegt, gibt.

10. Verfahren zur Herstellung eines Schwungrades (1) mit einer Drehachse (2) durch Zusammenbau eines Zahnkranzes (4), der ein inneres Umfangsende (6) besitzt mit einer senkrecht zu der Drehachse (2) liegenden komplementären radialen Fläche (10), mit einem Träger (3), der ein äußeres Umfangsende (8) besitzt mit einer senkrecht zu der Drehachse (2) liegenden radialen Fläche (8), **dadurch gekennzeichnet, dass** die folgenden Schritte ausgeführt werden:
- die komplementäre radiale Fläche (10) wird koaxial auf der radialen Fläche (8) positioniert,
- entlang der Richtung der Drehachse (2) werden in den Befestigungswinkelsektoren (14) Öffnungen (15), welche an der radialen Fläche (8) münden, und komplementäre Öffnungen (16), welche an der komplementären radialen Fläche (10) münden und die Öffnungen (15) verlängern, durchgehend gebohrt, und
- eine Schraube (17) wird in jeder Öffnung (15) und entsprechenden komplementären Öffnung (16) derart verschraubt, dass die komplementäre radiale Fläche (10) an der radialen Fläche (8) durch Druckkontakt in den Befestigungswinkelsektoren (14) befestigt wird und eine radiale Verformung des Zahnkranzes (4) zu der Drehachse (2) hin in Verformungswinkelsektoren (12) ermöglicht wird, welche zwischen zwei benachbarten Befestigungswinkelsektoren (14) angeordnet sind.
